# EUROPEAN PATENT APPLICATION

(11) **EP 4 783 310 A1**
(43) Date of publication of application: **29.07.2026**
(21) Application number: 25168292.8
(22) Date of filing: 03.04.2025
(51) Int. Cl.: H01M 50/15, H01M 50/103, H01M 50/30, H01M 50/60

(54) **SECONDARY BATTERY AND HOUSING THEREOF**

(30) Priority: 23.01.2025 CN 202520162310 U; 24.02.2025 CN 202510206586
(71) Applicant: JINKO SOLAR CO., LTD, ShangRao, Jiangxi 334100 (CN); Zhejiang Jinko Energy Storage Co., Ltd., Jiaxing, Zhejiang 314415 (CN)
(72) Inventor: ZENG, Xianrong, Haining City, Jiaxing, Zhejiang, 314415 (CN); YANG, Zixiang, Haining City, Jiaxing, Zhejiang, 314415 (CN); XIA, Tianjun, Haining City, Jiaxing, Zhejiang, 314415 (CN)
(74) Representative: Herrero & Asociados, S.L.

(57) **Abstract**

The present application relates to a secondary battery and a housing thereof. The secondary battery includes a housing, a bare cell, and a top cover assembly. The top cover assembly includes an end cover and lower plastic part provided on the end cover. The end cover seals an opening of the housing. The end cover is provided with an explosion-proof valve through hole for mounting an explosion-proof valve. The lower plastic part is provided with a plurality of exhaust through holes in communication with the explosion-proof valve. An area of the explosion-proof valve through hole accounts for 1.5% to 8% of an area of the end cover. Exhaust areas of orthographic projections of the plurality of exhaust through holes in the end cover account for 1% to 5% of the area of the end cover.

## Description

### TECHNICAL FIELD

The present application relates to the technical field of energy storage, and in particular, to a secondary battery and a housing thereof.

### BACKGROUND

Lithium battery has the advantages of a small volume, a high energy density, a long service life, environmental protection, or the like, and is widely applied to industries such as automobiles, electronic products, and energy storage systems. In some situations, during use of the lithium battery, on the one hand, due to the situations of overcharging, overdischarging, a short circuit, a severe environment, or the like, a large amount of gas may be generated in the lithium battery, and a temperature of the lithium battery may also be rapidly increased, so that an internal pressure of the lithium battery is increased, and a certain danger to a user is caused; on the other hand, shaking of the lithium battery may cause some electrolyte solutions to be splashed to a surface of lower plastic part towards an end cover, thereby generating accumulated electrolyte solutions on the surface or a groove of the lower plastic part to waste the electrolyte solutions.

### SUMMARY

Based on this, it is necessary to provide a secondary battery and a housing thereof to solve the problems of an explosion risk and electrolyte solution waste during use of a conventional lithium battery.

A secondary battery includes: a housing, an end of the housing being provided with an opening, and a receiving space being formed inside the housing; a bare cell provided in the receiving space; and a top cover assembly including an end cover and lower plastic part provided on the end cover, the end cover sealing the opening, an explosion-proof valve through hole for mounting an explosion-proof valve being provided in the end cover, a side of the lower plastic part away from the end cover facing the bare cell, the lower plastic part being provided with a plurality of exhaust through holes in communication with the explosion-proof valve, and an area of the explosion-proof valve through hole accounting for 1.5% to 8% of an area of the end cover; the plurality of exhaust through holes being arranged at intervals, and exhaust areas of orthographic projections of the plurality of exhaust through holes on the end cover accounting for 1% to 5% of the area of the end cover.

A secondary battery includes: a housing according to any one of the above embodiments; a bare cell received in the receiving space, the bare cell including a positive pole piece, a negative pole piece, and an insulating film; and an end cover sealing an opening end of the housing.

### BRIEF DESCRIPTION OF THE DRAWINGS

FIG. 1 is an exploded view of a secondary battery according to some embodiments of the present application.
FIG. 2 is a perspective view of the secondary battery shown in FIG. 1.
FIG. 3 is a top view of an end cover shown in FIG. 1.
FIG. 4 is a perspective view of lower plastic part in some embodiments of the present application.
FIG. 5 is a perspective sectional view of the lower plastic part in FIG. 4.
FIG. 6 is a top view of the lower plastic part in FIG. 4.
FIG. 7 is a schematic contour diagram of the lower plastic part and the end cover.
FIG. 8 is a schematic diagram of the end cover.
FIG. 9 is a schematic diagram of the end cover.
FIG. 10 is a schematic diagram of the end cover.
FIG. 11 is a perspective view of a top cover assembly and a bus bar.
FIG. 12 is a side view of FIG. 11.
FIG. 13 is a perspective view of a housing in some embodiments of the present application.
FIG. 14 is a front view of the housing in some embodiments of the present application.
FIG. 15 is a top view of the housing in some embodiments of the present application.
FIG. 16 is a partially enlarged view of region A in FIG. 13.
FIG. 17 is a view of a variation trend of a capacity of a receiving space with a thickness of a bottom wall in some embodiments of the present application.
FIG. 18 is a view of a variation trend of the capacity of the receiving space with a thickness of a large-surface side wall in some embodiments of the present application.
FIG. 19 is a view of a variation trend of the capacity of the receiving space with a thickness of a small-surface side wall in some embodiments of the present application.
FIG. 20 is a view of a variation trend of the capacity of the receiving space with an arc radius of a second arc portion in some embodiments of the present application.

### DETAILED DESCRIPTION

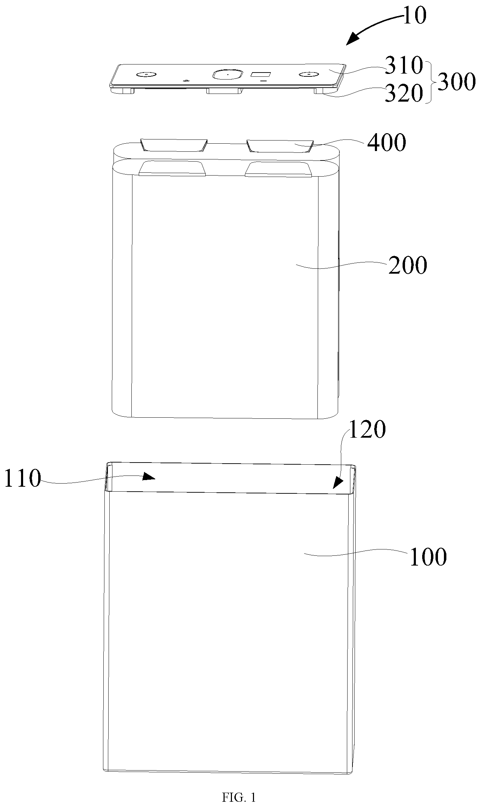

As shown in FIG. 1 to FIG. 5, a secondary battery 10 according to some embodiments of the present application includes a housing 100, a bare cell 200, and a top cover assembly 300.

An opening 110 is provided at one end of the housing 100, and a receiving space 120 is formed inside the housing 100.

The bare cell 200 is provided in the receiving space 120. The bare cell 200 is configured to be electrically connected to an external conductive member. An electrolyte solution is injected into the bare cell 200. The electrolyte solution contains an electrolyte, is a carrier for ion transport in the battery, and is composed of a lithium salt and an organic solvent in some cases. During charging and discharging of a lithium battery, lithium ions move back and forth between a positive electrode and a negative electrode. The electrolyte solution is a medium for migrating and transferring the lithium ions back and forth, so that the positive electrode and the negative electrode of the battery generate a potential difference to generate a current, so that the battery can work normally. A positive tab and a negative tab in a bent tab 400 of the bare cell 200 are connected to a positive post 210 and a negative post 220, respectively.

The top cover assembly 300 includes an end cover 310 and lower plastic part 320 provided on the end cover 310. The end cover 310 seals the opening 110. The end cover 310 is provided with an explosion-proof valve 500. A side of the lower plastic part 320 away from the end cover 310 faces the bare cell 200. The lower plastic part 320 is provided with an exhaust through hole 321 in communication with the explosion-proof valve 500. A receiving tank 322 for temporarily storing the electrolyte solution is further provided in a side of the lower plastic part 320 adjacent to the end cover 310. A bottom of the receiving tank 322 is provided with a backflow through hole 323. In some cases, when the secondary battery 10 is out of heat control, the explosion-proof valve 500 can be opened, such that the interior of the secondary battery 10 is in communication with the outside through the exhaust through hole 321, so as to perform pressure relief.

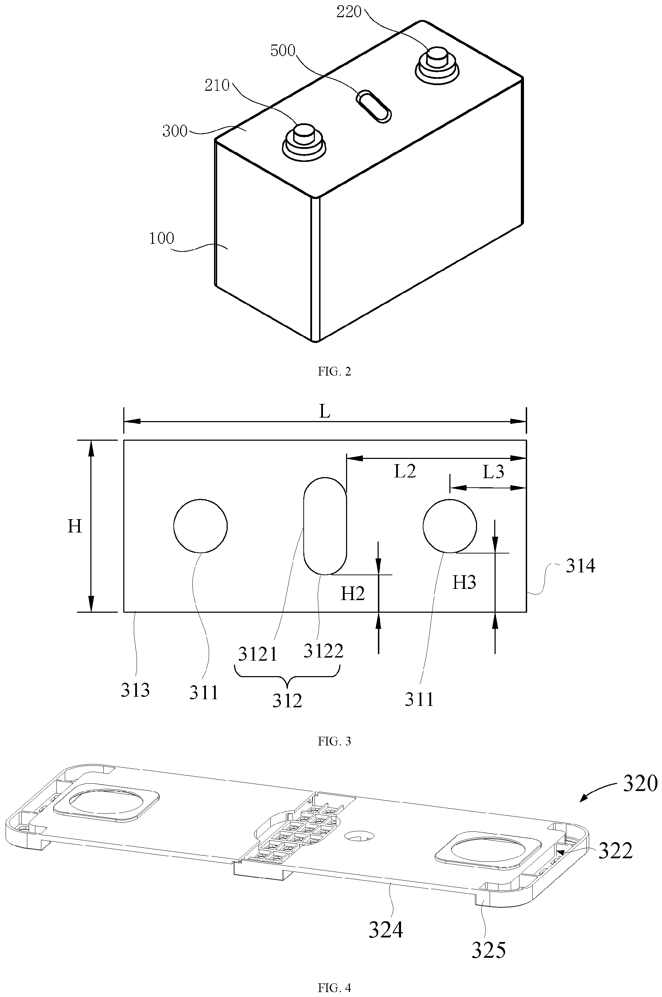

As shown in FIG. 3, the end cover 310 is provided with two post through holes 311 and an explosion-proof valve through hole 312 that extend through the end cover 310 along a thickness direction thereof. The two post through holes 311 are configured to receive the positive post 210 and the negative post 220, respectively. The positive post 210 and the negative post 220 extend through the two post through holes 311 to extend out of the housing 100. The explosion-proof valve through hole 313 is configured to mount the explosion-proof valve 500. During the thermal runaway of the secondary battery 10, the explosion-proof valve 500 may communicate the interior of the battery with the outside for the pressure relief. At least one explosion-proof valve through hole 312 is provided. At least one explosion-proof valve 500 is provided.

For the battery, a size of the post through hole 311 determines cross-sectional areas of the positive post 210 and the negative post 220, which in turn determine a current passing capability when the battery is electrically connected to an external conductive component. The larger the cross-sectional areas of the positive post 210 and the negative post 220, the stronger the current passing capability.

A pressure release speed of the explosion-proof valve 500 is limited by an area of the explosion-proof valve through hole 312. In some cases, the pressure release speed of the explosion-proof valve 500 is related to a caliber of a pressure release passage of the explosion-proof valve 500, i.e., the exhaust through hole 321, which in turn affects an overall size of the explosion-proof valve 500. Therefore, the overall size of the explosion-proof valve 500 is affected by a size of the explosion-proof valve through hole 312. The larger the size of the explosion-proof valve through hole 312 is, the larger the exhaust through hole 321 may be. Thus, a flow rate of gas during the pressure release of the explosion-proof valve 500 can be increased, so that the gas in the battery can be discharged more quickly.

However, structural strength of the battery is also quite important for safe operation of the secondary battery 10. When the battery is squeezed, it is necessary to ensure that the housing 100 does not collapse, and it is also necessary to ensure that the top cover assembly 300 is not deformed. The size of the post through hole 311 and the size of the explosion-proof valve through hole 312 cannot be set arbitrarily due to an influence on strength of the end cover 310. Meanwhile, a size of the exhaust through hole 321 directly affects strength of the lower plastic part 320 and a gas discharge capability of the secondary battery 10, and cannot be arbitrarily set. Therefore, how to consider cell performance parameter requirements and safety performance requirements is a problem to be considered when the end cover 310 and the lower plastic part 320 are designed.

In view of the above problem, the present application provides the following improvements for the end cover 310 and the lower plastic part 320 to ensure the strength of the end cover 310 and the lower plastic part 320 on the premise of ensuring the pressure release capability of the secondary battery 10.

In the present application, the area of the explosion-proof valve through hole 312 accounts for 1.5% to 8% of an area of the end cover 310. A plurality of exhaust through holes 321 are provided. The plurality of exhaust through holes 321 are arranged at intervals. Exhaust areas of orthographic projections of the plurality of exhaust through holes 321 in the end cover 310 account for 1% to 5% of the area of the end cover. The area of the end cover ranges from 4,200mm² to 75,000mm².

The end cover 310 may be of a thin plate structure. In some embodiments, the end cover 310 is made of aluminum. The end cover 310 is assembled to the housing 100 in a thickness direction. As shown in FIG. 3, the thickness direction of the end cover 310 is a direction perpendicular to a drawing plane. In the thickness direction of the end cover 310, the end cover 310 includes an inner side and an outer side, the inner side faces the interior of the housing 100, and the outer side faces the exterior of the housing 100. The post through hole 311 and the explosion-proof valve through hole 312 both extend through the inner side and the outer side in the thickness direction. The inner side and the outer side may have substantially equal areas.

In some embodiments, a plane perpendicular to the thickness direction of the end cover 10 is used as a projection plane. The projection plane may be in particular a plane of the inner side or the outer side. The area of the post through hole 311 may be an area of an orthographic projection of the post through hole 311 on the projection plane. The area of the explosion-proof valve through hole 312 may be an area of an orthographic projection of the explosion-proof valve through hole 312 on the projection plane. The area of the end cover 310 may be the smaller of areas of orthographic projections of the inner side and the outer side on the projection plane.

In some embodiments, the number of the exhaust through holes 321 may be 4, 8, 12, or more. A shape of the exhaust through hole 321 may be any geometric pattern without limitation. The plurality of exhaust through holes 321 can increase an exhaust efficiency inside the secondary battery 10 while guaranteeing the strength of the lower plastic part 320.

In some embodiments, the area of the end cover 310 may range from 4,200mm² to 15,000mm², from 15,000mm² to 45,000mm², from 5,500mm² to 60,000mm2, from 45,000mm² to 75,000mm², or from 65,000mm² to 75,000mm². The area of the explosion-proof valve through hole 312 may range from 63mm² to 225mm², from 1,200mm² to 1,600mm² or from 675mm² to 6,000mm².

The exhaust area ranges from 42mm² to 3,750mm². In some embodiments, the exhaust area may range from 55mm² to 600mm² and 3,250mm² to 3,750mm², and the range of the exhaust area may be other intervals in the range from 42mm² to 3,750mm².

In some embodiments, the area of the end cover 310 may be any one of 4,200mm², 5,586mm², 6,600mm², 7,791mm², 8,859mm², 9,986mm², 10,204mm², 11,400mm², 12,040mm², 13,056mm², 22,500mm², 33,800mm², 43,589mm², 55,500mm², 62,500mm², 70,400mm², and 75,000mm². The area of the explosion-proof valve through hole 312 may be 63mm², 327mm², 393mm², or 6,000mm². A value of the exhaust area may be any one of 42mm², 56mm², 66mm², 78mm², 442mm², 499mm², 512mm², 570mm², 652mm², 1,125mm², 1,690mm², 2,179mm², 2,775mm², 3,125mm², 3,520mm², and 3,750mm².

The area of the end cover 310, the area of the explosion-proof valve through hole 312, and the exhaust area are not limited to the specific values provided above.

In the present application, based on the overall size of the end cover 310, by selecting the area of the explosion-proof valve through hole 312 and the area of the exhaust through hole 321 having the suitable value ranges, on the premise of ensuring that the secondary battery 10 has the rapid pressure release capability, the structural strength of the end cover 310 and the lower plastic part 320 is guaranteed, thereby giving considerations to the performance parameter requirements and the safety performance requirements of the secondary battery 10.

It is considered that the forming of the backflow through hole 323 also has a certain influence on the strength of the lower plastic part 320. As such, in some embodiments, a sum of hole forming areas of orthographic projections of the exhaust through hole 321 and the backflow through hole 323 on the end cover 310 accounts for 2% to 10% of the area of the end cover 310. The area of the end cover 310 ranges from 4,200mm² to 75,000mm², and the sum of the hole forming areas ranges from 84mm² to 7,500mm² according to the above ratio of 2% to 10%. In some embodiments, the sum of the hole forming areas may range from 550mm² to 6,000mm² and 6,500mm² to 7,500mm², and the range of the sum of the hole forming areas may be other intervals in the range of 84mm² to 7,500mm².

In some embodiments, a value of the sum of the hole forming areas may be any one of 84mm², 279mm², 660mm², 779mm², 885mm², 998mm², 1,020mm², 1,140mm², 1,305mm², 2,250mm², 3,380mm², 4,358mm², 5,550mm², 6,250mm², 7,040mm², and 7,500mm².

The area of the end cover 310 and the sum of the hole forming areas are not limited to the specific values provided above. For example, the area of the end cover 310 may be other values within the range of 4,200mm² to 75,000mm². The sum of the hole forming areas may be other values within the range of 84mm² to 7,500mm².

In the secondary battery 10, the lower plastic part 320 is provided with the exhaust through hole 321 in communication with the explosion-proof valve 500, so that when a pressure inside the battery is increased, the pressure is released by flowing to the explosion-proof valve 500 through the exhaust through hole 321, and the secondary battery 10 is prevented from exploding. Then, the receiving tank 322 for temporarily storing the electrolyte solution is provided in the side of the lower plastic part 320 adjacent to the end cover 310, and the backflow through hole 323 is formed in the bottom of the receiving tank 322, so that when the battery shakes to cause some electrolyte solutions to be splashed to a surface of the lower plastic part 320 facing the end cover 310, the electrolyte solution can flow to the receiving tank 322 and then flow to the bare cell 200 from the backflow through hole 323 in the bottom of the receiving tank 322, thus avoiding waste of the electrolyte solution. The sum of the hole forming areas of the orthographic projections of the exhaust through hole 321 and the backflow through hole 323 in the end cover 310 accounts for 2% to 10% of the area of the end cover 310, and the area of the end cover 310 ranges from 4,200mm² to 75,000mm², so that the strength of the lower plastic part 320 is not influenced on the premise that a weight of the lower plastic part 320 is reduced.

In order to increase a path of backflow of the electrolyte solution to the bare cell 200 without affecting the structural strength of the lower plastic part 320, in some embodiments, a plurality of backflow through holes 323 are provided. The plurality of backflow through holes 323 are divided into two groups. The two groups of backflow through holes 323 are provided in two ends of the lower plastic part 320, respectively. In some embodiments, the two groups of backflow through holes 323 are distributed in both sides of the exhaust through hole 321. The number of the backflow through holes 323 in each group may be 4, 8, 12, or more. A shape of the backflow through hole 323 may be any geometric pattern without limitation. Backflow areas of orthographic projections of the plurality of backflow through holes 323 on the end cover 310 account for 0.5% to 3% of the area of the end cover 310. The backflow area ranges from 21mm² to 2,250mm². In some embodiments, the backflow area can range from 165mm² to 1,800mm² and from 1,950mm² to 2,250mm², and the range of the backflow area can be other intervals within the range from 21mm² to 2,250mm². With the above arrangement, when the battery shakes to cause some electrolyte solutions to be splashed to the surface of the lower plastic part 320 facing the end cover 310, the electrolyte solution can flow to the receiving tanks 322 at the two ends of the lower plastic part 320 and then flow to the bare cell 200 from the backflow through holes 323 in the bottoms of the receiving tanks 322, thus greatly avoiding the waste of the electrolyte solution.

In some embodiments, a value of the backflow area may be any one of 21mm², 33mm², 49mm², 198mm², 299mm², 306mm², 342mm², 361mm², 391mm², 675mm², 1,014mm², 1,307mm², 1,665mm², 1,875mm², 2,112mm², and 2,250mm². The backflow area is not limited to the specific values provided above, and the backflow area can be other values within the range of 21mm²-2250mm², for example.

In order to design the lower plastic part 320 more conveniently, in some embodiments, the lower plastic part 320 includes a body 324 and bosses 325 provided at two ends of the body 324. The body 324 is connected to the end cover 310. A side of the boss 325 away from the body 324 faces the bare cell 200. In some embodiments, the receiving tank 322 is formed in a part of a surface of the body 324 towards the end cover 310 directly facing the boss 325. A depth of the receiving tank 322 extends along a height direction of the boss 325 and does not extend through the boss 325. Thus, the receiving tank 322 can conveniently contain the splashed electrolyte solution.

In some embodiments, the lower plastic part 320 is received in the receiving space 120 during mounting. In order to improve stability of the secondary battery 10, a side of the boss 325 away from the body 324 abuts against the bare cell 200 located in the receiving space 120. In some embodiments, the secondary battery 10 further includes a connecting sheet. The connecting sheet is provided on the body 324 and is spaced apart from the boss 325. The connecting sheet is also connected to the bent tab 400 on the bare cell 200. The connecting sheet and the bent tab 400 are located between the body 324 and the bare cell 200. A set height is formed between a side of the body 324 away from the end cover 310 and a side of the boss 325 away from the body 324. A mounting space of the connecting sheet and the bent tab 400 is affected by a height of the body 324 and the set height.

To properly design the height of the body 324, in some embodiments, the height of the body 324 may be 1mm. Thus, connection strength between the body 324 and the end cover 310 can be ensured without affecting the mounting space of the connecting sheet and the bent tab 400.

In order to design the set height properly, in some embodiments, the set height is set to a sum of a thickness of the connecting sheet and a reserved height of the bent tab 400. In some embodiments, the connecting sheet has a thickness in the range of 0.5mm to 1.5mm. For example, the thickness of the connecting sheet can range from 0.85mm to 1mm and from 1.1mm to 1.5mm, and the range of the thickness of the connecting sheet can be other intervals within the range of 0.5mm to 1.5mm. In some embodiments, the thickness of the connecting sheet may be any one of 0.6mm, 0.75mm, 0.8mm, 0.85mm, 0.9mm, 0.95mm, 1.0mm, 1.05mm, 1.1mm, 1.15mm, 1.2mm, 1.25mm, 1.3mm, 1.35mm, 1.4mm, 1.45mm, and 1.5mm. However, the thickness of the connecting sheet is not limited to the specific values provided above, and the thickness of the connecting sheet may be other values within the range of 0.5mm to 1.5mm, for example.

The bent tab 400 includes a plurality of single pole pieces connected in sequence. The reserved height is a product of a thickness of each single pole piece, a number of the single pole pieces, and a set coefficient. The set coefficient ranges from 3 to 6. In some embodiments, the thickness of the single pole piece may be 0.012mm. The number of the single pole pieces may range from 35 to 60. In some embodiments, the number of the single pole pieces may be any one of 36, 38, 40, 42, 44, 46, 48, 50, 52, 54, 55, 56, 58, and 60. However, the number of the single pole pieces is not limited to the specific values provided above, and the number of the single pole pieces may be any other integer within the range of 35-60, for example.

With the above arrangement, the set height is in the range of 1.76mm to 5.82mm. In some embodiments, the set height may range from 1.8mm to 3.85mm and 3.9mm to 5.8mm, and the range of the set height may be other intervals within the range of 1.76mm to 5.82mm. For example, a value of the set height may be any one of 1.86mm, 2.01mm, 2.06mm, 2.11mm, 2.16mm, 2.21mm, 2.26mm, 2.31mm, 2.36mm, 2.76mm, 4.92mm, 5.07mm, 5.42mm, 5.47mm, 5.52mm, 5.57mm, 5.62mm, and any value of 1.76mm to 5.82mm. In some cases, when the set height is less than 1.76mm, the mounting space of the connecting sheet and the bent tab 400 is too small, thereby increasing the probability of a short circuit caused by tab tearing and tab insertion. In some cases, when the set height is less than 5.82mm, height setting of the bare cell 200 in the receiving space 120 may be affected, and an electric quantity of the secondary battery 10 may be affected.

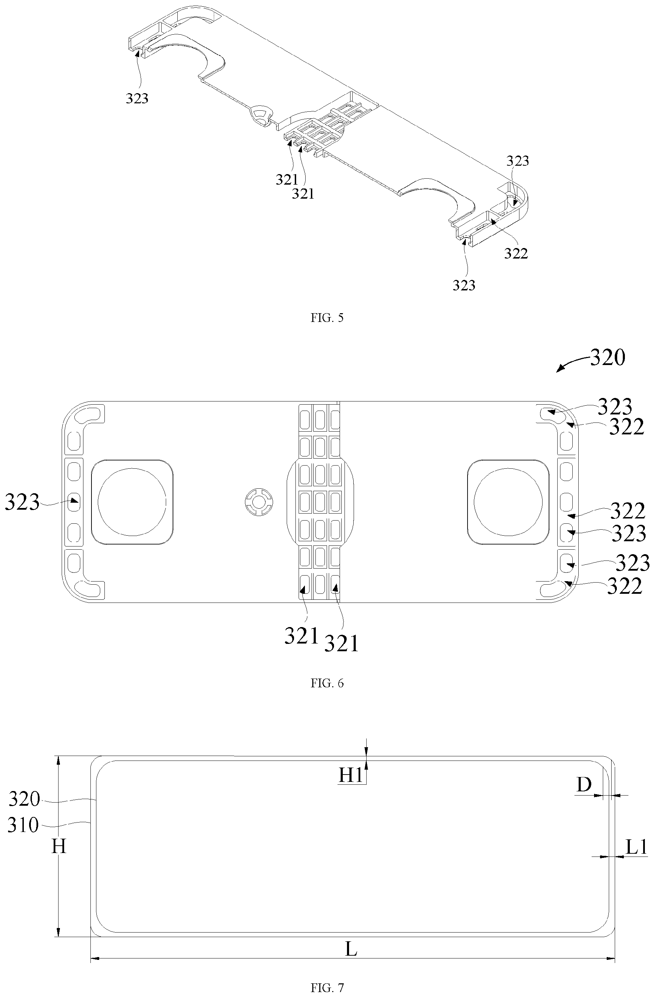

Referring to FIG. 6 and FIG. 7 together, FIG. 6 is a top view of a structure of the lower plastic part 320 in FIG. 4, and FIG. 7 is a schematic view of an outline structure of the lower plastic part 320 and the end cover 310 in some embodiments of the present application. In order to reduce the weight of the lower plastic part 320 while ensuring an excellent insulating performance of the lower plastic part 320, in some embodiments, an enclosed area enclosed by an orthographic projection of an outer contour of the lower plastic part 320 on the end cover 310 accounts for 85% to 95% of the area of the end cover 310. The enclosed area ranges from 3,570mm² to 71,250mm². In some embodiments, the enclosed area can range from 4,950mm² to 54,000mm² and 58,500mm² to 67,500mm², and the range of the enclosed area can be other intervals in the range of 3,570mm² to 71,250mm².

In some embodiments, a value of the enclosed area may be any one of 4,748mm², 5,610mm², 6,622mm², 7,530mm², 8,488mm², 8,673mm², 9,690mm², 10,234mm², 11,097mm², 19,125mm², 28,730mm², 41,409mm², 52,725mm², 59,375mm², 66,880mm², and 71,250mm². The enclosed area is not limited to the specific values provided above, and the enclosed area can be other values within the range of 3,570mm²-71,250mm², for example.

As shown in FIG. 7, in some embodiments, the end cover 310 is a rectangular plate. A length of a long side of the end cover 310 is L. A length of a short side of the end cover 310 is H. In some embodiments, during mounting, the lower plastic part 320 enters the receiving space 120 from the opening 110, and the end cover 310 is welded to the housing 100.

In order to avoid that laser avoids the lower plastic part 320 and hits other components in the housing 100 during laser welding of the end cover 310 and the housing 100, in some embodiments, a distance between an edge of the lower plastic part 320 and an edge of the end cover 310 along a length direction of the lower plastic part 320 has a first distance value L1. L1 ranges from 1mm to 1.5mm. In some embodiments, L1 may range from 1.1mm to 1.35mm and 1.4mm to 1.5mm, and the range of L1 may be other intervals within the range of 1mm to 1.5mm. For example, a value of L1 can be 1.1mm, 1.15mm, 1.2mm, 1.25mm, 1.3mm, 1.35mm, 1.4mm, 1.45mm, 1.48mm, and any value of 1mm to 1.5mm. Along a width direction of the lower plastic part 320, the distance between the edge of the lower plastic part 320 and the edge of the end cover 310 has a second distance value H1. H1 ranges from 1mm to 5mm. In some embodiments, H1 may range from 1.5mm to 3.5mm and 4.0mm to 4.9mm, and the range of H1 may be other intervals within the range of 1mm to 5mm. For example, a value of H1 can be 1.5mm, 2mm, 2.5mm, 3mm, 3.5mm, 4mm, 4.3mm, 4.5mm, 4.8mm, and any value of 1mm to 5mm.

With the above arrangement, a gap is formed between the edge of the lower plastic part 320 and the edge of the end cover 310, so that the lower plastic part 320 does not interfere with the housing 100 in the process of entering the housing 100, and then, the end cover 310 and the housing 100 can be conveniently packaged. On the other hand, by setting the range of the first distance value between the lower plastic part 320 and the end cover 310 to 1mm to 1.5mm and the range of the second distance value to 1mm to 5mm, when the end cover 310 and the housing 100 are packaged, in the laser welding process of the end cover 310 and the housing 100, the laser is not prone to avoid the lower plastic part 320 and hit other components of the housing 100, thus improving safety of the secondary battery 10 during mounting.

In some embodiments, a first corner of the lower plastic part 320 is configured to be in an arc shape. A second corner of the end cover 310 is provided with a chamfer. A linear distance between a central point of the first corner and a central point of the second corner has a third distance value D. The third distance value is greater than the first distance value and the second distance value.

To powerfully support the beneficial effects of the present application, test data is provided in the following table 1.

**Table 1**

| Serial number | A | B | C | S1 | S2 | H | L | H1 | L1 |
|---|---|---|---|---|---|---|---|---|---|
| 1 | 126 | 42 | 84 | 4200 | 3822 | 30 | 140 | 1 | 1 |
| 2 | 196 | 56 | 140 | 5586 | 5027 | 38 | 147 | 1.5 | 1 |
| 3 | 224 | 78 | 146 | 7791 | 7020 | 49 | 159 | 2 | 1.5 |
| 4 | 303 | 120 | 183 | 12040 | 10985 | 70 | 172 | 2.5 | 1.5 |
| 5 | 3750 | 1500 | 2250 | 75000 | 69000 | 150 | *500* | 3.5 | 1.5 |

As shown in table 1, five kinds of lower plastic part 320 are designed according to the solution of the present application. In the table, the area unit is mm², the length size unit is mm, A is the sum of the hole forming areas, B is the exhaust area, C is the backflow area, S1 is the area of the end cover 310, S2 is the area enclosed by the outer contour of the lower plastic part 320, H is the short side of the end cover 310, L is the long side of the end cover 310, L1 is the first distance value, and H1 is the second distance value. With the above arrangement, an exhaust efficiency, a backflow efficiency, and safety when the end cover 310 is welded to the housing 100 can be improved on the premise that the strength of the plastic part 320 is not influenced.

Comparative embodiments are provided in the following table 2.

**Table 2**

| Serial number | A | B | C | S1 | S2 | H | L | H1 | L1 |
|---|---|---|---|---|---|---|---|---|---|
| 6 | 42 | 21 | 16.8 | 4200 | 3822 | 30 | 140 | 1 | 1 |
| 7 | 55 | 27 | 22 | 5586 | 5027 | 38 | 147 | 1.5 | 1 |
| 8 | 77 | 39 | 31 | 7791 | 7020 | 49 | 159 | 2 | 1.5 |
| 9 | 1806 | 963 | 602 | 12040 | 10985 | 70 | 172 | 2.5 | 1.5 |
| 10 | 11250 | 4500 | 3750 | 75000 | 69000 | 150 | *500* | 3.5 | 1.5 |

As shown in table 2, five lower plastic part structures for comparison are designed in table 2. In the table, the area unit is mm², the length size unit is mm, A is the sum of the hole forming areas, B is the exhaust area, C is the backflow area, S1 is the area of the end cover 310, S2 is the area enclosed by the outer contour of the lower plastic part 320, H is the short side of the end cover 310, L is the long side of the end cover 310, L1 is the first distance value, and H1 is the second distance value.

In the lower plastic part structures with the serial numbers of 6 to 8, the ratio of the sum of the hole forming areas of the orthographic projections of the exhaust through hole and the backflow through hole to the area of the end cover is less than 2%, the ratio of the exhaust area of the orthographic projection of the exhaust through hole alone on the end cover to the area of the end cover is less than 1%, and the ratio of the backflow area of the orthographic projection of the backflow through hole alone on the end cover to the area of the end cover is less than 0.5%. With the above arrangement, when the gas of the battery needs to be exhausted for pressure release, a gas circulation efficiency is low, and a gas discharging speed is low, which is prone to cause secondary explosion of the battery, and on the other hand, when the electrolyte solution needs to flow to the bare cell through the backflow through hole, a flow rate is reduced to influence an efficiency.

For the lower plastic part structures with the serial numbers of 9 to 10, the ratio of the sum of the hole forming areas to the area of the end cover is greater than 10%, the ratio of the exhaust area to the area of the end cover is greater than 5%, and the ratio of the backflow area to the area of the end cover is greater than 3%. With the above arrangement, the lower plastic part structure may be provided with excessive through holes, and the lower plastic part has a large deformation amount after strength tests of stretching, compressing, or the like, so that the lower plastic part cannot meet requirements.

From the above, reasonability of the lower plastic part structure designed according to the solution of the present application is obtained with table 1 as an example.

In some embodiments, in order to well take account of the current passing capability and the safety performance of the secondary battery 10, the post through hole 311 of the end cover 310 is improved as follows in the present application.

In some embodiments, as shown in FIG. 3, along a plane perpendicular to the thickness direction of the end cover 310, the area of each post through hole 311 is defined as E, the area of the explosion-proof valve through hole 312 is defined as F, and the area of the end cover 310 is defined as S1. A ratio of E to S1 is 0.5% to 5%. A ratio of F to S1 is 1.5% to 8%. E ranges from 21mm² to 3,750mm². F ranges from 63mm² to 6,000mm². S1 ranges from 4,200mm² to 75,000mm².

In some embodiments, S1 can range from 4,200mm² to 15,000mm², from 15,000mm² to 45,000mm², or from 45,000mm² to 75,000mm². E can range from 21mm² to 450mm², from 750mm² to 1,350mm², or from 2,250mm² to 3,750mm². F can range from 63mm² to 225mm², from 1,200mm² to 1,600mm², or from 675mm² to 6,000mm². In some embodiments, a value of E may be any one of 21mm², 28.26mm², 283mm², and 3,750mm². A value of F may correspondingly be any one of 63mm², 327mm², 393mm², and 6,000mm². A value of S1 may correspondingly be any one of 4,200mm², 5,586mm², 7,791mm², 12,040mm², and 75,000mm².

The end cover 310 may have any shape, which is not limited herein.

In some embodiments, the end cover 310 is a rectangular plate. The end cover 310 includes two long sides 313 and two short sides 314. A length of the long side 313 is L. A length of the short side 314 is H.

In some embodiments, the inner side and the outer side of the end cover 310 may be substantially rectangular. Four corners of the end cover 310 may be right corners or rounded corners, which is not limited herein.

The two long sides 313 are oppositely provided. The two short sides 314 are oppositely provided. A length direction of the end cover 310 is an extending direction of the long side 313. A width direction of the end cover 310 is an extending direction of the short side 314. In some embodiments, the rectangular plate may be applicable to a square battery.

In some embodiments, a minimum distance between the explosion-proof valve through hole 312 and the short side 314 in the length direction of the end cover 310 is L2. A ratio of L2 to L is 30% to 50%. L ranges from 140mm to 500mm. L2 ranges from 42mm to 250mm. For example, L ranges from 140mm to 200mm, or from 200mm to 500mm. L2 ranges from 42mm to 100mm, or from 100mm to 150mm, or from 150mm to 250mm.

In some embodiments, a value of L may be any one of 140mm, 159mm, 220mm, 400mm, and 500mm. A value of L2 may be any one of 42mm, 71.5mm, 95mm, 195mm, and 250mm.

In some embodiments, a shortest distance between the explosion-proof valve through hole 312 and the long side 313 in the width direction of the end cover 310 is H2. A ratio of H2 to H is 15% to 50%. H ranges from 30mm to 150mm. H2 ranges from 4.5mm to 75mm. For example, H can range from 30mm to 50mm, or from 50mm to 80mm, or from 80mm to 150mm. H2 can range from 4.5mm to 18mm, or from 20mm to 50mm, or from 50mm to 75mm.

In some embodiments, a value of H may be any one of 30mm, 40mm, 70mm, 109mm, 120mm, and 150mm. A value of H2 may correspondingly be any one of 4.5mm, 10.5mm, 21mm, 52mm, 56mm, and 75mm. The excessively short distance between the explosion-proof valve 500 and the long side 313 or the short side 314 does not facilitate mounting of the explosion-proof valve 500 and may further affect strength of an edge region of the end cover 310 and the structural strength of the end cover 310.

To this end, the ratio of the minimum distance L2 between the explosion-proof valve through hole 312 and the short side 314 to the length L of the long side 313 is 30% to 50%. Thus, there is a sufficient distance between the explosion-proof valve through hole 312 and the short side 314, and the space can also be configured to arrange the post through hole 311. The ratio of the minimum distance H2 between the explosion-proof valve through hole 312 and the long side 313 to the length H of the short side 314 is 15% to 50%. In the case where the short side 314 is relatively small, it is ensured that the explosion-proof valve through hole 312 is not too adjacent to the long side 313.

In some embodiments, a minimum distance between the post through hole 311 and the short side 314 is L3. A ratio of L3 to L is 5% to 25%. L ranges from 140mm to 500mm. L3 ranges from 7mm to 125mm. For example, L can range from 140mm to 200mm, or from 200mm to 500mm. L3 can range from 7mm to 30mm, or from 40mm to 75mm, or from 80mm to 125mm.

In some embodiments, a value of L may be any one of 140mm, 159mm, 220mm, 400mm, and 500mm. A value of L3 may correspondingly be any one of 7mm, 21.5mm, 35mm, 89mm, and 125mm.

In some embodiments, a shortest distance between the post through hole 311 and the long side 313 is H3. A ratio of H3 to H is 12% to 50%. H ranges from 30mm to 150mm. H3 ranges from 3.6mm to 75mm. For example, H can range from 30mm to 50mm, or from 50mm to 80mm, or from 80mm to 150mm. H3 can range from 3.6mm to 20mm, or from 30mm to 45mm, or from 45mm to 75mm.

In some embodiments, a value of H may be any one of 30mm, 40mm, 70mm, 109mm, 120mm, and 150mm. A value of H3 may correspondingly be any one of 3.6mm, 11mm, 15mm, 48.5mm, 55mm, and 75mm. The minimum distance between the post through hole 311 and the long side 313 and the minimum distance between the post through hole 311 and the short side 314 are set within the above ranges, thus ensuring that the post through hole 311 is not too adjacent to the long side 313 or the short side 314.

In some embodiments, as shown in FIG. 3, the explosion-proof valve through hole 312 includes two straight sides 3121 and two arc sides 3122. L:H<3:1. The two straight sides 3121 are spaced apart along the length direction of the end cover 310. An extending direction of the straight side 3121 is a length direction of the explosion-proof valve through hole 312. When the explosion-proof valve through hole 312 includes the two straight sides 3121 and the two arc sides 3122, the explosion-proof valve through hole 312 is substantially a kidney-shaped hole. The extending direction of the straight side 3121 is the length direction of the explosion-proof valve through hole 312.

When the two straight sides 3121 are spaced apart in the width direction of the end cover 310, the straight side 3121 of the explosion-proof valve through hole 312 is parallel to the short side 314 of the end cover 310.

L:H<3:1, and a difference between the size of the end cover 310 in the length direction and the size of the end cover 310 in the width direction is relatively small. To this end, the straight side 3121 of the explosion-proof valve through hole 312 is provided parallel to the short side 314 of the end cover 310. In this way, the explosion-proof valve through hole 312 utilizes a larger space in the width direction of the end cover 310, and a larger arranging space is vacated for providing the post through hole 311 in the length direction.

In some embodiments, a value of L:H may be any one of 2.45, 2.5, 2.68, and 2.83.

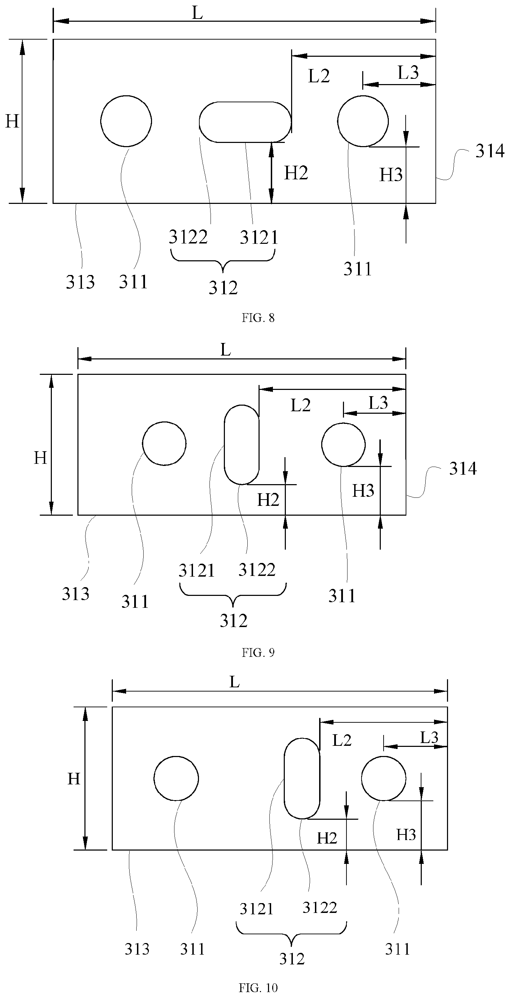

In some embodiments, as shown in FIG. 8, the explosion-proof valve through hole 312 includes two straight sides 3121 and two arc sides 3122. L:H≥3:1. The two straight sides 3121 are spaced apart along the width direction of the end cover 310. The extending direction of the straight side 3121 is the length direction of the explosion-proof valve through hole 312.

When the two straight sides 3121 are spaced apart in the width direction of the end cover 310, the straight side 3121 of the explosion-proof valve through hole 312 is parallel to the long side 313 of the end cover 310.

When L:H≥3:1, the size of the end cover 310 in the length direction is much greater than the size of the end cover 310 in the width direction, and the end cover 310 has a large space in the length direction. To this end, the straight side 3121 of the explosion-proof valve through hole 312 is provided parallel to the long side 313 of the end cover 310. Thus, a longitudinal direction of the explosion-proof valve through hole 312 is along the length direction of the end cover 310, so that the explosion-proof valve through hole 312 can fully utilize the space in the length of the end cover 310, an influence on the structural strength of the end cover 310 is small, and positions of the through holes in the end cover 310 are provided in a coordinated mode.

In some embodiments, the value of L:H may be any one of 3.19, 3.61, 3.77, and 3.86.

In some embodiments, as shown in FIG. 9, the explosion-proof valve through hole 312 is located between the two post through holes 311 in the length direction of the end cover 310. The two post through holes 311 are asymmetrically provided about the explosion-proof valve through hole 312.

In the related art, the two post through holes 311 are generally symmetrically provided about the explosion-proof valve through hole 312, so that positions of the two post through holes 311 and the explosion-proof valve through hole 312 are relatively limited, and design flexibility is insufficient.

In the present application, under the condition of satisfying the foregoing size relationship, the two post through holes 311 do not need to be symmetrically provided about the explosion-proof valve through hole 312, and the structural strength of the end cover 310 can be still ensured, thereby providing more choices for designing the end cover 310.

In some embodiments, as shown in FIG. 8, the explosion-proof valve through hole 312 is centrally provided along the length direction of the end cover 310. The post through hole 311 on the left side of FIG. 9 is slightly closer to the explosion-proof valve through hole 312. The post through hole 311 on the right side of FIG. 4 is slightly farther from the explosion-proof valve through hole 312.

In some embodiments, as shown in FIG. 10, the explosion-proof valve through hole 312 is not centrally provided along the length direction of the end cover 310. In FIG. 10, the explosion-proof valve through hole 312 is relatively adjacent to a left end of the end cover and relatively far from a right end of the end cover 310 in the length direction of the end cover 310.

In some embodiments, on the basis that the explosion-proof valve through hole 312 is not centrally provided, the two post through holes 311 may be symmetrically provided about the explosion-proof valve through hole 312, and may alternatively be asymmetrically provided about the explosion-proof valve through hole 312.

In the present application, under the condition of satisfying the foregoing size relationship, the explosion-proof valve through hole 312 may not be centrally provided, and the structural strength of the end cover 310 can be still ensured, thereby providing more choices for designing the end cover 310.

To powerfully support the beneficial effects of the present application, test data is provided in the following table 3.

**Table 3**

| | E | F | S1 | H | L | H2 | L2 | H3 | L3 |
|---|---|---|---|---|---|---|---|---|---|
| 11 | 21 | 63 | 4200 | 30 | 140 | 4.5 | 42 | 3.6 | 7 |
| 12 | 28.26 | 327 | 5516 | 38 | 147 | 6 | 65 | 9.5 | 13.5 |
| 13 | 80 | 355 | 6120 | 40 | 151 | 7.5 | 67.5 | 11 | 15.2 |
| 14 | 155 | 378 | 7267 | 46 | 157 | 9.6 | 69.3 | 13.5 | 19.8 |
| 15 | 283 | 393 | 7791 | 49 | 159 | 10.5 | 71.5 | 15 | 21.5 |
| 16 | 283 | 393 | 12040 | 70 | 172 | 21 | 80 | 15 | 25.5 |
| 17 | 502 | 700 | 20100 | 82 | 220 | 35 | 95 | 26 | 35 |
| 18 | 1503 | 2102 | 35160 | 98 | 278 | 46 | 135 | 39 | 48.6 |
| 19 | 2018 | 3205 | 52330 | 109 | 348 | 52 | 166 | 48.5 | 57.5 |
| 20 | 2721 | 3891 | 68350 | 120 | 400 | 56 | 195 | 55 | 89 |
| 21 | 3300 | 4907 | 70010 | 141 | 450 | 68 | 219 | 66 | 105 |
| 22 | 3750 | 6000 | 75000 | 150 | 500 | 75 | 250 | 75 | 125 |
| 23 | 720 | 1030 | 12040 | 80 | 200 | 21 | 105 | 15 | 25.5 |
| 24 | 1020 | 1657 | 20100 | 80 | 289 | 46 | 95 | 25 | 39 |

As shown in table 3, 12 end covers 310, i.e., the eleventh embodiment to the twenty-second embodiment, are designed according to the solution of the present application. In the table, the area unit is mm², and the length size unit is mm. In the 12 end covers 310, the ratio of E to S1 is 0.5% to 5%, and the ratio of F to S1 is 1.5% to 8%. E ranges from 21mm² to 3,750mm². F ranges from 63mm² to 6,000mm². S1 ranges from 4,200mm² to 75,000mm².

In addition, end covers in the first comparative embodiment and the second comparative embodiment are manufactured, i.e., the twenty-third embodiment and the twenty-fourth embodiment. The ratio of E to S1 is not between 0.5% and 5%; the ratio of F to S1 is within 1.5% to 8%.

A strength test was performed on the 12 end covers of the eleventh embodiment to the twenty-second embodiment and the two end covers of the twenty-third embodiment and the twenty-fourth embodiment respectively, and a performance test was performed on 12 batteries with the 12 end covers of the eleventh embodiment to the twenty-second embodiment, and batteries with the end covers of the twenty-third embodiment and the twenty-fourth embodiment. Test results show that:
(1) a pressing test is performed at a pressure of 1MP on each of the end covers 310 of the eleventh embodiment to the twenty-second embodiment, deformation amounts are all less than 1mm, and the pressing test is passed. When the end covers of the twenty-third embodiment and the twenty-fourth embodiment are subjected to the pressing test, deformation amounts are 1.5mm and 1.6mm respectively and both larger than 1mm.
(2) Current passing capabilities of the positive post 210 and the negative pole 40 of the eleventh embodiment to the twenty-second embodiment are tested, and taking copper as an example, current passing amounts are less than or equal to 8E/mm², that is, the maximum current passing amount may be less than or equal to 8E/mm², which meets design requirements. In the twenty-third embodiment and the twenty-fourth embodiment, current passing capabilities of the adaptable positive and negative posts are greater than 8E/mm² respectively.
(3) A thermal runaway test is performed on each of the batteries of the eleventh embodiment to the twenty-second embodiment, and all the batteries pass the thermal runaway test, which indicates that the explosion-proof valve through hole 312 has a reasonable size. In the twenty-third embodiment and the twenty-fourth embodiment, the thermal runaway test is not passed, and battery housings of the twenty-third embodiment and the twenty-fourth embodiment undergo different degrees of cracking deformation.

From the above comparative analysis, although the post has a better current passing capability in the comparative embodiments, the safety requirement of the battery cannot be considered. The structural design of the end cover 310 of embodiments of the present application can consider the safety problem of the battery under the condition of considering the performance parameter requirements of the cell.

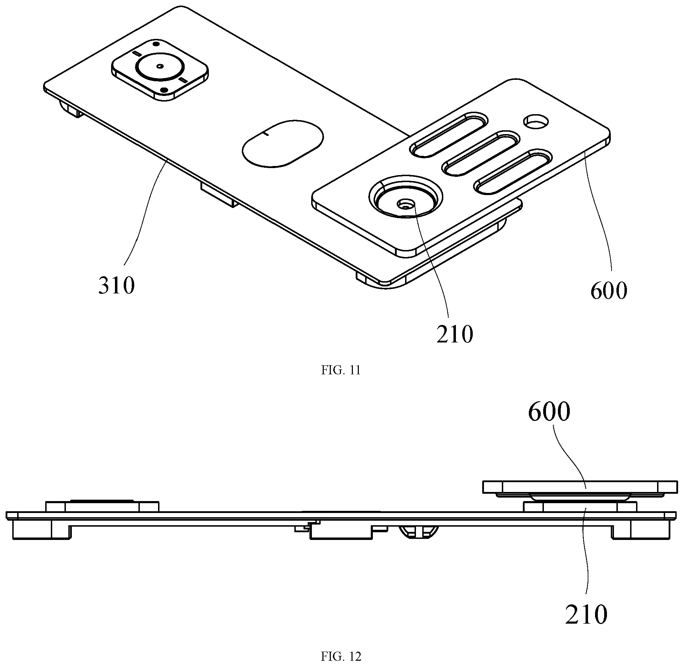

During application of the above secondary battery 10, in some cases, a plurality of batteries are connected in series and parallel by bus bars 600, and the bus bar 600 may connect the posts of two adjacent batteries. Alternatively, the battery is connected to a signal collection circuit via the bus bar 600. As shown in FIG. 11 and FIG. 12, the state where the bus bar 600 is connected to the positive post 210 assembled to the top cover assembly 300 is illustrated.

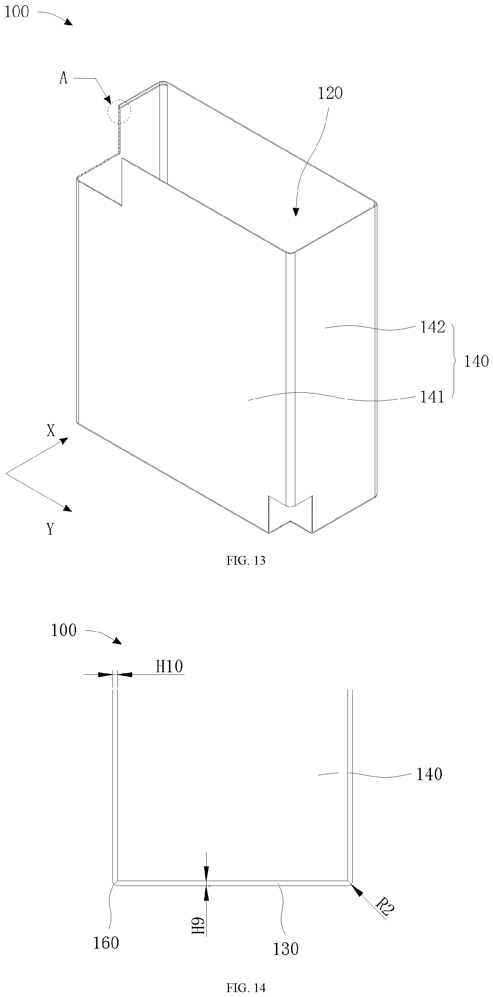

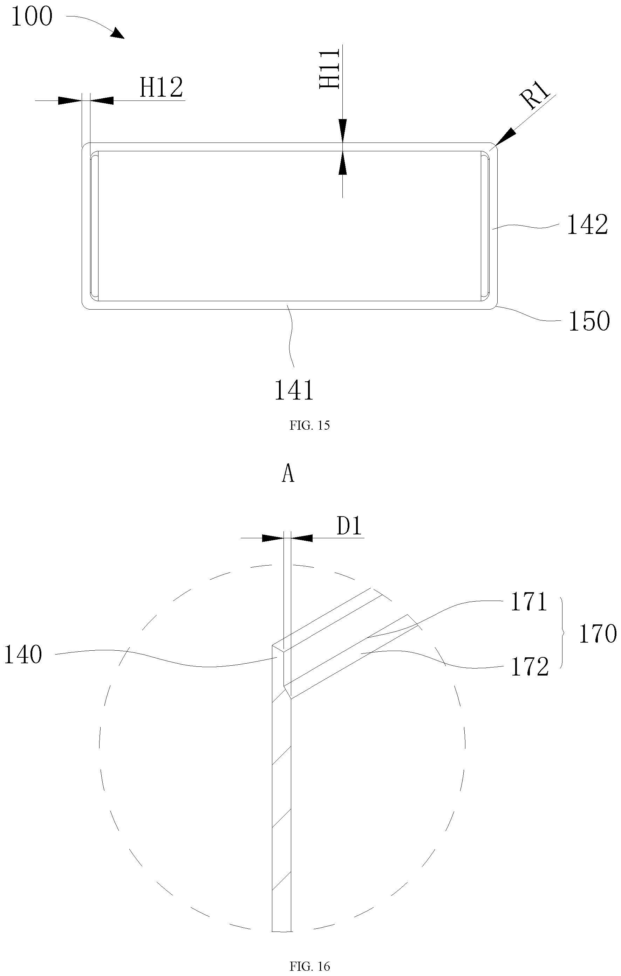

As shown in FIG. 13 to FIG. 16, some embodiments of the present application further provide a housing 100 of a secondary battery 10. The housing 100 may be configured to receive a bare cell 200. The housing 100 includes a bottom wall 130 and a side wall 140. The bottom wall 130 is connected to the side wall 140. The bottom wall 130 and the side wall 140 enclose a receiving space 120 for receiving the bare cell 200. In some embodiments, a thickness of the bottom wall 130 is defined as H9, a thickness of the side wall 140 is defined as H10, and a capacity of the receiving space 120 is defined as L0. The capacity L0 of the receiving space 120 is a sum of a size of a hollow space enclosed by the bottom wall 130 and the side wall 140, a volume of the side wall 140, and a volume of the bottom wall 130. 0.85mm≤ H9≤2.5mm. 0.35mm≤H10≤1.5mm. In some embodiments, the thickness H9 of the bottom wall 130 may be any one of 0.85mm, 0.92mm, 1.0mm, 1.08mm, 1.15mm, 1.22mm, 1.3mm, 1.38mm, 1.45mm, 1.52mm, 1.6mm, 1.68mm, 1.75mm, 1.82mm, 1.9mm, 1.98mm, 2.05mm, 2.12mm, 2.2mm, 2.28mm, 2.35mm, 2.42mm, and 2.5mm. The thickness H10 of the side wall 140 may be any one of 0.35mm, 0.42mm, 0.5mm, 0.58mm, 0.65mm, 0.72mm, 0.8mm, 0.88mm, 0.95mm, 1.02mm, 1.1mm, 1.18mm, 1.25mm, 1.32mm, 1.4mm, 1.45mm, and 1.5mm. Certainly, the thickness H9 of the bottom wall 130 and the thickness H10 of the side wall 140 are not limited to the specific values provided above. For example, the thickness H9 of the bottom wall 130 may be other values in the range of 0.85mm to 2.5mm, and the thickness H10 of the side wall 140 may be other values in the range of 0.35mm to 1.5mm. The specific values of the thickness H9 of the bottom wall 130 and the thickness H10 of the side wall 140 are not limited in the present application.

In the housing 100 of the secondary battery 10, the bottom wall 130 and the side wall 140 enclose the receiving space 120, the thickness H9 of the bottom wall 130 is set to 0.85mm to 2.5mm, and the thickness H10 of the side wall 140 is set to 0.35mm to 1.5mm. By reasonably controlling the thicknesses of the bottom wall 130 and the side wall 140, the housing 100 of the secondary battery can be ensured to have sufficient structural strength, and the housing 100 of the secondary battery 10 can be prevented from being cracked in packaging and using processes. When the bare cell 200 is received in the receiving space 120, the housing 100 of the secondary battery 10 and the bare cell 200 have a high matching degree, the bad phenomenon of an explosion caused by an excessively high internal pressure of the housing 100 of the secondary battery 10 can be avoided, and a safety performance of the secondary battery 200 is improved.

In some embodiments, as shown in FIG. 13 and FIG. 14, a relationship between the thickness H9 of the bottom wall 130 and the capacity L0 of the receiving space 120 is: 0.3269 ln(H9) + 0.943 ≤ L0 ≤ 0.3995 ln(H9) + 1.4825. The relationship between the capacity L0 of the receiving space 120 and the thickness H9 of the bottom wall 130 is embodied with the following table 4 as an example. In the table, the unit of the thickness H9 is mm and the unit of the capacity L0 is liter (L).

**Table 4**

| | | | | | | | | | | | | |
|---|---|---|---|---|---|---|---|---|---|---|---|---|
| H9 | 0.85 | 1 | 1.15 | 1.3 | 1.45 | 1.6 | 1.75 | 1.9 | 2.05 | 2.2 | 2.35 | 2.5 |
| L0 | 0.89-1.42 | 0.94-1.48 | 0.99-1.54 | 1.03-1.59 | 1.06-1.63 | 1.1-1.67 | 1.13-1.71 | 1.15-1.74 | 1.18-1.77 | 1.2-1.8 | 1.22-1.82 | 1.24-1.85 |

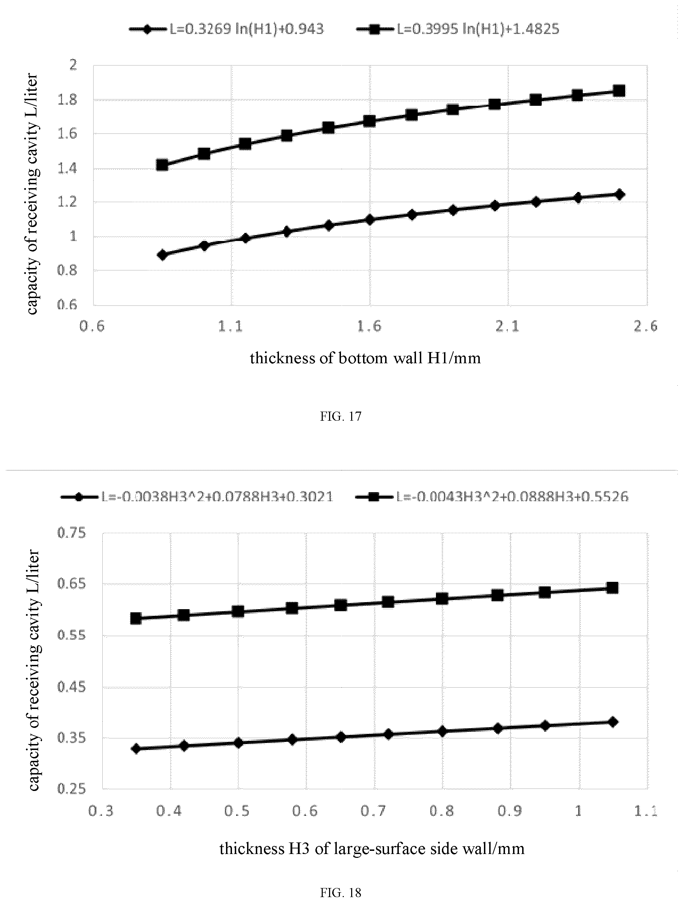

Thus, a variation trend of the capacity L0 of the receiving space 120 with the thickness H9 of the bottom wall 130 is shown in FIG. 17. The capacity L0 of the receiving space 120 is reasonably designed according to the thickness H9 of the bottom wall 130, so as to ensure that the bottom wall 130 can bear weight pressing and volume bearing of the bare cell 200 in the receiving space 120. That is, the housing 100 of the secondary battery 10 can have sufficient structural strength, and the housing 100 of the secondary battery 10 can be prevented from being cracked in the packaging and using processes.

In some embodiments, for example, when a bare cell 200 with a large size specification is received, since the capacity L0 of the receiving space 120 needs to be set to be larger, the thickness H9 of the bottom wall 130 can be set to be larger, so as to avoid the bad phenomenon that the bottom wall 130 is cracked due to the excessively large size and weight of the bare cell 200. On the contrary, when a bare cell 200 with a small size specification is received, since the capacity L0 of the receiving space 120 needs to be set to be smaller, the thickness H9 of the bottom wall 130 can be set to be smaller, so as to realize a miniaturization and light-weight design of the housing 100 of the secondary battery 10 and reduce a molding cost of the housing 100 of the secondary battery 10 on the basis of ensuring that the bottom wall 130 has sufficient structural strength.

In some embodiments, as shown in FIG. 13 to FIG. 15, the side walls 140 include two large-surface side walls 141 spaced apart in a first direction (X direction shown in FIG. 17) and two small-surface side walls 142 spaced apart in a second direction (Y direction shown in FIG. 13). The two large-surface side walls 141 and the two small-surface side walls 142 are connected end to end. A surface size of the large-surface side wall 141 is larger than that of the small-surface side wall 142. In some embodiments, the two large-surface side walls 141 are spaced apart in the X direction shown in FIG. 13. The two small-surface side walls 142 are spaced apart in the Y direction shown in FIG. 13. Two sides of the large-surface side wall 141 are respectively adjoined by the two small-surface side walls 142. Two sides of the small-surface side wall 142 are respectively adjoined by the two large-surface side walls 141. For example, a thickness of the large-surface side wall 141 is defined as H11, and a thickness of the small-surface side wall 142 is defined as H12. 0.35mm≤H11≤1.05mm. 0.35mm≤H12≤1.5mm. In some embodiments, the thickness H11 of the large-surface side wall 141 may be any one of 0.35mm, 0.42mm, 0.5mm, 0.58mm, 0.65mm, 0.72mm, 0.8mm, 0.88mm, 0.95mm, and 1.05mm. The thickness H12 of the small-surface side wall 142 may be any one of 0.35mm, 0.42mm, 0.5mm, 0.58mm, 0.65mm, 0.72mm, 0.8mm, 0.88mm, 0.95mm, 1.02mm, 1.1mm, 1.18mm, 1.25mm, 1.32mm, 1.4mm, 1.48mm, and 1.5mm. Certainly, the thickness H11 of the large-surface side wall 141 and the thickness H12 of the small-surface side wall 142 are not limited to the specific values provided above, for example, the thickness H11 of the large-surface side wall 141 may be other values in the range of 0.35mm to 1.05mm, and the thickness H12 of the small-surface side wall 142 may be other values in the range of 0.35mm to 1.5mm. The specific values of the thickness H11 of the large-surface side wall 141 and the thickness H12 of the small-surface side wall 140 are not limited in the present application.

In the housing 100 of the secondary battery 10, the thickness H11 of the large-surface side wall 141 is set to 0.35mm to 1.05mm, and the thickness H12 of the small-surface side wall 142 is set to 0.35mm to 1.5mm. By reasonably controlling the thicknesses of the large-surface side wall 141 and the small-surface side wall 142, the housing 100 of the secondary battery 10 can be ensured to have sufficient structural strength, and the housing 100 of the secondary battery 10 can be prevented from being cracked in the packaging and using processes. When the bare cell 200 is received in the receiving space 120, the housing 100 of the secondary battery 10 and the bare cell 200 have a high matching degree, the bad phenomenon of the explosion caused by the excessively high internal pressure of the housing 100 of the secondary battery 10 can be avoided, and the safety performance of the secondary battery 200 is improved.

In some embodiments, as shown in FIG. 13 to FIG. 15, a relationship between the thickness H11 of the large-surface side wall 141 and the capacity L0 of the receiving space 120 is: -0.0038H11² + 0.0788H11 + 0.3021 ≤ L0 ≤ -0.0043H11² + 0.0888H11 + 0.5526. The relationship between the capacity L0 of the receiving space 120 and the thickness H11 of the large-surface side wall 141 is embodied with the following table 5 as an example. In the table, the unit of the thickness H11 is mm and the unit of the capacity L0 is liter (L).

**Table 5**

| | | | | | | | | | | |
|---|---|---|---|---|---|---|---|---|---|---|
| H11 | 0.35 | 0.42 | 0.5 | 0.58 | 0.65 | 0.72 | 0.8 | 0.88 | 0.95 | 1.05 |
| L0 | 0.33-0.58 | 0.33-0.59 | 0.34-0.6 | 0.35-0.6 | 0.35-0.61 | 0.36-0.61 | 0.36-0.62 | 0.37-0.63 | 0.37-0.63 | 0.38-0.64 |

Thus, a variation trend of the capacity L0 of the receiving space 120 with the thickness H11 of the large-surface side wall 141 is shown in FIG. 18, and the capacity L0 of the receiving space 120 is reasonably designed according to the thickness H11 of the large-surface side wall 141, so as to ensure that the large-surface side wall 141 can bear side pressing of the bare cell 200 in the receiving space 120. That is, the housing 100 of the secondary battery 10 can have sufficient structural strength, and the housing 100 of the secondary battery 10 can be prevented from being cracked in the packaging and using processes.

In some embodiments, for example, when a bare cell 200 with a large size specification is received, since the capacity L0 of the receiving space 120 needs to be set to be larger, the thickness H11 of the large-surface side wall 141 can be set to be larger, so as to avoid the bad phenomenon that the large-surface side wall 141 is seriously pressed to be cracked due to the excessively large size of the bare cell 200. On the contrary, when a bare cell 200 with a small size specification is received, since the capacity L0 of the receiving space 120 needs to be set to be smaller, the thickness H11 of the large-surface side wall 141 can be set to be smaller, so as to realize the miniaturization and light-weight design of the housing 100 of the secondary battery 10 and reduce the molding cost of the housing 100 of the secondary battery on the basis of ensuring that the large-surface side wall 141 has sufficient structural strength.

In some embodiments, as shown in FIG. 13 to FIG. 15, a relationship between the thickness H12 of the small-surface side wall 142 and the capacity L0 of the receiving space 120 is: 0.3884H12^{0.4354} ≤ L0 ≤ 0.8413H12^{0.2926}. The relationship between the capacity L of the receiving space 120 and the thickness H4 of the small-surface side wall 142 is embodied with the following table 6 as an example. In the table, the unit of the thickness H12 is mm and the unit of the capacity L0 is liter (L).

**Table 6**

| | | | | | | | | | | |
|---|---|---|---|---|---|---|---|---|---|---|
| H12 | 0.35 | 0.5 | 0.65 | 0.8 | 0.95 | 1.1 | 1.18 | 1.25 | 1.4 | 1.5 |
| L0 | 0.25-0.62 | 0.29-0.69 | 0.32-0.74 | 0.35-0.79 | 0.38-0.83 | 0.4-0.87 | 0.42-0.88 | 0.43-0.9 | 0.45-0.93 | 0.46-0.95 |

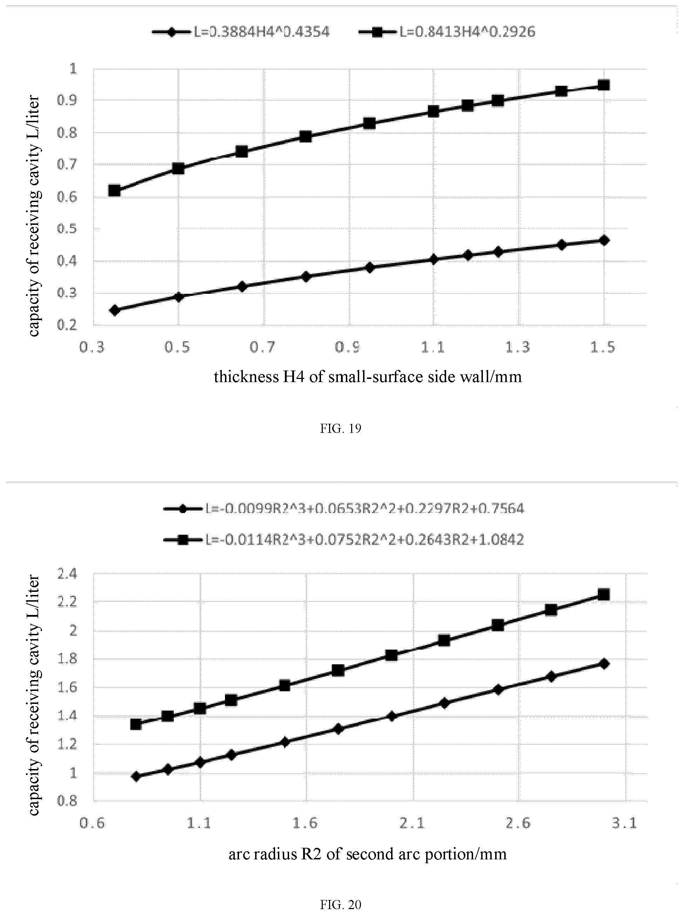

Thus, a variation trend of the capacity L0 of the receiving space 120 with the thickness H12 of the small-surface side wall 142 is shown in FIG. 19, and the capacity L0 of the receiving space 120 is reasonably designed according to the thickness H12 of the small-surface side wall 142, so as to ensure that the small-surface side wall 142 can bear side pressing of the bare cell 200 in the receiving space 120. That is, the housing 100 of the secondary battery 10 can have sufficient structural strength, and the housing 100 of the secondary battery 10 can be prevented from being cracked in the packaging and using processes.

In some embodiments, for example, when a bare cell 200 with a large size specification is received, since the capacity L0 of the receiving space 120 needs to be set to be larger, the thickness H12 of the small-surface side wall 142 can be set to be larger, so as to avoid the bad phenomenon that the small-surface side wall 142 is seriously pressed to be cracked due to the excessively large size of the bare cell 200. On the contrary, when a bare cell 200 with a small size specification is received, since the capacity L0 of the receiving space 120 needs to be set to be smaller, the thickness H12 of the small-surface side wall 142 can be set to be smaller, so as to realize the miniaturization and light-weight design of the housing 100 of the secondary battery 10 and reduce the molding cost of the housing 100 of the secondary battery 10 on the basis of ensuring that the small-surface side wall 142 has sufficient structural strength.

In some embodiments, as shown in FIG. 13 to FIG. 15, a junction of the large-surface side wall 141 and the adjacent small-surface side wall 142 is provided with a first arc portion 150. The first arc portion 150 has an arc radius R1. 1.5mm≤R1≤3mm. In some embodiments, the arc radius R1 of the first arc portion 150 may be any one of 1.5mm, 1.62mm, 1.75mm, 1.88mm, 2mm, 2.12mm, 2.25mm, 2.38mm, 2.5mm, 2.62mm, 2.75mm, 2.88mm, and 3mm. Certainly, the arc radius R1 of the first arc portion 150 is not limited to the specific values provided above, and for example, the arc radius R1 of the first arc portion 150 may be other values within the range of 1.5mm to 3mm. The specific value of the arc radius R1 of the first arc portion 150 is not limited in the present application. In some embodiments, the first arc portion 150 is an arc surface molded on an outer side of the housing 100 of the secondary battery 10.

Thus, the arc radius R1 of the first arc portion 150 is set to 1.5mm to 3mm. By reasonably controlling the arc radius of the first arc portion 150, a space utilization rate of the housing 100 of the secondary battery 10 is optimized, structural strength of the large-surface side wall 141 and the small-surface side wall 142 in the connection process is improved, smooth transition can be realized between the large-surface side wall 141 and the small-surface side wall 142, the junction of the large-surface side wall 141 and the small-surface side wall 142 is not prone to generate stress concentration, and the bad phenomenon that the housing 100 of the secondary battery 10 is cracked due to pressing of the bare cell 200 is avoided.

In some embodiments, as shown in FIG. 13 and FIG. 14, a second arc portion 160 is formed at a junction of the bottom wall 130 and the side wall 140. The second arc portion 160 has an arc radius R2. 0.8mm≤R2≤3mm. In some embodiments, the arc radius R2 of the second arc portion 160 may be any one of 0.8mm, 0.88mm, 0.95mm, 1.02mm, 1.1mm, 1.18mm, 1.25mm, 1.32mm, 1.4mm, 1.5mm, 1.58mm, 1.65mm, 1.75mm, 1.82mm, 1.9mm, 2mm, 2.08mm, 2.15mm, 2.25mm, 2.32mm, 2.4mm, 2.5mm, 2.58mm, 2.65mm, 2.75mm, 2.82mm, 2.9mm, and 3 mm. Certainly, the arc radius R2 of the second arc portion 160 is not limited to the specific values provided above, and for example, the arc radius R2 of the second arc portion 160 may be other values within the range of 0.8mm to 3mm. The specific value of the arc radius R2 of the second arc portion 160 is not limited in the present application. In some embodiments, the second arc portion 160 is an arc surface molded on the outer side of the housing 100 of the secondary battery 10.

Thus, the arc radius R2 of the second arc portion 160 is set to 0.8mm to 3mm. By reasonably controlling the arc radius of the second arc portion 160, the space utilization rate of the housing 100 of the secondary battery 10 is optimized, structural strength of the bottom wall 130 and the side wall 140 in the connection process is improved, smooth transition can be realized between the bottom wall 130 and the side wall 140, the junction of the bottom wall 130 and the side wall 140 is not prone to generate stress concentration, and the bad phenomenon that the housing 100 of the secondary battery 10 is cracked due to pressing of the bare cell 200 is avoided.

Further, as shown in FIG. 13 and FIG. 14, a relationship between the arc radius R2 of the second arc portion 160 and the capacity L0 of the receiving space 120 is: -0.0099R2³ + 0.0653R2² + 0.2297R2 + 0.7564 ≤ L0 ≤ -0.0114R2³ + 0.0752R2² + 0.2643R2 + 1.0842. The relationship between the capacity L0 of the receiving space 120 and the arc radius R2 of the second arc portion 160 is embodied with the following table 7 as an example. In the table, the unit of the arc radius R2 is mm and the unit of the capacity L0 is liter (L).

**Table 7**

| | | | | | | | | | | | |
|---|---|---|---|---|---|---|---|---|---|---|---|
| **R2** | 0.8 | 0.95 | 1.1 | 1.25 | 1.5 | 1.75 | 2 | 2.25 | 2.5 | 2.75 | 3 |
| L | 0.98-1.34 | 1.03-1.4 | 1.07-1.45 | 1.13-1.51 | 1.21-1.61 | 1.31-1.72 | 1.4-1.82 | 1.49-1.93 | 1.58-2.04 | 1.68-2.14 | 1.77-2.25 |

Thus, a variation trend of the capacity L0 of the receiving space 120 with the arc radius R2 of the second arc portion 160 is shown in FIG. 20. The capacity L0 of the receiving space 120 is reasonably designed according to the arc radius R2 of the second arc portion 160 of the bottom wall 130, so as to ensure that the junction of the bottom wall 130 and the side wall 140 can bear weight pressing and volume bearing of the bare cell 200 in the receiving space 120. That is, the housing 100 of the secondary battery 10 can have sufficient structural strength, and the housing 100 of the secondary battery 10 can be prevented from being cracked in the packaging and using processes.

In some embodiments, as shown in FIG. 13, FIG. 14, and FIG. 16, a side of the side wall 140 away from the bottom wall 130 is provided with a protrusion 170. The protrusion 170 extends towards the interior of the receiving space 120. The protrusion 170 is configured to lay and bear the end cover 310. When the end cover 310 is borne on the protrusion 170, the end cover 310 can seal the receiving space 120. As in some embodiments, the protrusion 170 is formed on a side of the side wall 140 adjacent to an opening end of the receiving space 120. An extending length of the protrusion 170 towards the interior of the receiving space 120 is D1. 0.1mm≤D1≤0.3mm. In some embodiments, the extending length D1 of the protrusion 170 towards the interior of the receiving space 120 may be any one of 0.1mm, 0.12mm, 0.15mm, 0.18mm, 0.2mm, 0.22mm, 0.25mm, 0.28mm, and 0.3mm. Certainly, the extending length D1 of the protrusion 170 towards the interior of the receiving space 120 is not limited to the specific value provided above, and for example, the extending length D1 of the protrusion 170 towards the interior of the receiving space 120 may be other values within the range of 0.1mm to 0.3mm. The specific values of the extending length D1 of the protrusion 170 towards the interior of the receiving space 120 are not limited in the present application.

Thus, the extending length D1 of the protrusion 170 towards the interior of the receiving space 120 is set to 0.1mm to 0.3mm. By reasonably controlling the extending length of the protrusion 170, when the end cover 310 is borne on the protrusion 170, stability of bearing of the end cover 310 on the boss is improved, and interference with the arrangement of the bare cell 200 in the receiving space 120 caused by the excessively large extending length of the protrusion 170 is avoided.

In some embodiments, as shown in FIG. 13, FIG. 14, and FIG. 16, the protrusion 170 includes a transition portion 171 and a support portion 172. The transition portion 171 is smoothly connected to the side wall 140. The support portion 172 is connected to the transition portion 171. That is, two sides of the transition portion 171 are respectively connected to the side wall 140 and the support portion 172, and the support portion 172 extends into the receiving space 120 to support the end cover 310. A section of the transition portion 171 in a thickness direction of the side wall 140 has an arc shape. Alternatively, the transition portion 171 and the side wall 140 form an obtuse angle. The transition portion 171 is inclined towards the bottom wall 130. In any of the above-mentioned manners, the transition portion 171 can be smoothly connected to the side wall 140, so as to improve the structural strength of the connection of the support portion 172 to the side wall 140. The transition portion 171 is tapered towards the opening end of the receiving space 120, so that the end cover 310 can enter the receiving space 120 through the opening end.

In some embodiments, as shown in FIG. 1, FIG. 13, FIG. 14, and FIG. 16, two protrusions 170 are provided. The two protrusions 170 are opposite. The two protrusions 170 are located on a side of the side wall 140 facing the interior of the receiving space 120. Thus, two opposite sides of the end cover 310 may be respectively borne by the two protrusions 170. On the one hand, the stability of bearing of the end cover 310 on the protrusion 170 can be improved. On the other hand, the arrangement of the small number of protrusions 170 can simplify the molding cost of the housing 100 of the secondary battery 10. The protrusion 170 does not occupy a too large internal space of the housing 100 of the secondary battery 10, and the protrusion 170 does not cause excessive interference influences on the arrangement of the bare cell 200 in the receiving space 120.

As shown in FIG. 1, FIG. 13, and FIG. 14, the present application further provides a secondary battery 10. The secondary battery 10 includes the housing 100 of a secondary battery 10 according to the above technical solution, a bare cell 200, and an end cover 310. The bare cell 200 is received in the receiving space 120. The bare cell 200 includes a positive pole piece, a negative pole piece, and an insulating film. In some embodiments, the bare cell 200 serves as a core component of the secondary battery 10 for energy storage and functions, and the bare cell 200 is formed by winding or stacking the positive and negative pole pieces in some cases. The insulating film is provided between the positive pole piece and the negative pole piece. The positive pole piece and the negative pole piece are provided with tabs respectively. In a charging and discharging process of the secondary battery 10, the positive pole piece and the negative pole piece can perform corresponding chemical reactions to realize charging and discharging functions, and are connected to each other through the tab, a post and an external device circuit to form a current loop. The end cover 310 is provided at the housing 100 of the secondary battery 10 by welding, bonding, hot melting, or the like. The end cover 310 can be hermetically provided at an opening end of the housing 100. When the end cover 310 is provided at the opening end of the housing 100 of the secondary battery 10, the end cover 310 can protect the bare cell 200.

In the above-mentioned secondary battery 10, by controlling the thicknesses of the bottom wall 130 and the side wall 140, the housing 100 of the secondary battery 10 can be ensured to have enough structural strength, and when the bare cell 200 is received in the housing 100 of the secondary battery 10, the housing 100 of the secondary battery 10 is prevented from being cracked, the housing 100 of the secondary battery 10 and the bare cell 200 have a high matching degree, and the safety performance of the secondary battery 10 can be improved.

## Claims

1. A secondary battery (10), comprising:
a housing (100), an end of the housing (100) being provided with an opening (110), and a receiving space (120) being formed inside the housing (100);
a bare cell (200) provided in the receiving space (120); and
a top cover assembly (300) comprising an end cover (310) and lower plastic part (320) provided on the end cover (310), the end cover (310) sealing the opening (110), an explosion-proof valve through hole (312) configured to mount an explosion-proof valve (500) being provided in the end cover (310), a side of the lower plastic part (320) away from the end cover (310) facing the bare cell (200), the lower plastic part (320) being provided with a plurality of exhaust through holes (321) in communication with the explosion-proof valve (500), an area of the explosion-proof valve through hole (312) accounting for 1.5% to 8% of an area of the end cover (310); the plurality of exhaust through holes (321) being arranged at intervals, and exhaust areas of orthographic projections of the plurality of exhaust through holes (321) on the end cover (310) accounting for 1% to 5% of the area of the end cover (310).

2. The secondary battery (10) according to claim 1, wherein a receiving tank (322) configured to temporarily store an electrolyte solution is provided on a side of the lower plastic part (320) adjacent to the end cover (310), a backflow through hole (323) is provided in a bottom of the receiving tank (322), and a sum of hole forming areas of orthographic projections of the exhaust through hole (321) and the backflow through hole (323) on the end cover (310) accounts for 2% to 10% of the area of the end cover (310).

3. The secondary battery (10) according to claim 1, wherein a receiving tank (322) configured to temporarily store an electrolyte solution is provided in a side of the lower plastic part (320) adjacent to the end cover (310), a plurality of backflow through holes (323) are provided in the bottom of the receiving tank (322), the plural backflow through holes (323) are divided into two groups, the two groups of backflow through holes (323) are provided at two ends of the lower plastic part (320), respectively, and backflow areas of orthographic projections of the plurality of backflow through holes (323) on the end cover (310) account for 0.5% to 3% of the area of the end cover (310).

4. The secondary battery (10) according to any one of the preceding claims, further comprising a connecting sheet, wherein the lower plastic part (320) comprises a body (324) and two bosses (325) provided at two ends of the body (324), the body (324) is connected to the end cover (310), a side of the boss (325) away from the body (324) faces the bare cell (200), a set height is formed between a side of the body (324) away from the end cover (310) and the side of the boss (325) away from the body (324); the connecting sheet is provided on the body (324) and is spaced apart from the boss (325), the connecting sheet is further connected to a bent tab (400) on the bare cell (200), and the set height is a sum of a thickness of the connecting sheet and a reserved height of the bent tab (400).

5. The secondary battery (10) according to claim 4, wherein the set height ranges from 1.76mm to 5.82mm; the bent tab (400) comprises a plurality of single pole pieces that are connected in sequence, the reserved height is a product of a thickness of each single pole piece, a number of the single pole pieces, and a set coefficient, the set coefficient ranges from 3 to 6; and the thickness of the connecting sheet ranges from 0.5mm to 1.5mm.

6. The secondary battery (10) according to any one of the preceding claims, wherein an enclosed area enclosed by an orthographic projection of an outer contour of the lower plastic part (320) on the end cover (310) accounts for 85% to 95% of the area of the end cover (310);
wherein along a length direction of the lower plastic part (320), a distance between an edge of the lower plastic part (320) and an edge of the end cover (310) is a first distance value, and the first distance value ranges from 1mm to 1.5mm; wherein along a width direction of the lower plastic part (320), the distance between the edge of the lower plastic part (320) and the edge of the end cover (310) is a second distance value, and the second distance value ranges from 1mm to 5mm;
wherein a first corner of the lower plastic part (320) is configured to be in a circular arc shape, a chamfer is provided at a second corner of the end cover (310), a linear distance between a central point of the first corner and a central point of the second corner is a third distance value, and the third distance value is greater than the first distance value and the second distance value.

7. The secondary battery (10) according to any one of the preceding claims, wherein the end cover (310) is further provided with two post through holes (311) extending through the end cover (310) along a thickness direction thereof, and along a plane perpendicular to the thickness direction of the end cover (310), a ratio of an area of each post through hole (311) to the area of the end cover (310) is 0.5% to 5%.

8. The secondary battery (10) according to claim 7, wherein the end cover (310) is a rectangular plate, the end cover (310) comprises two long sides (313) and two short sides (314), the long sides (313) have a length L, and the short sides (314) have a length H; a minimum distance between the post through hole (311) and the short side (314) is L3, and a ratio of L3 to L is 5% to 25%; a shortest distance between the post through hole (311) and the long side (313) is H3, and a ratio of H3 to H is 12% to 50%.

9. The secondary battery (10) according to claim 7, wherein the end cover (310) is a rectangular plate, the end cover (310) comprises two long sides (313) and two short sides (314), the long sides (313) have a length L, and the short sides (314) have a length H; in a length direction of the end cover (310), a minimum distance between the explosion-proof valve through hole (312) and the short side (314) is L2, and a ratio of L2 to L is 30% to 50%; in a width direction of the end cover (310), a shortest distance between the explosion-proof valve through hole (312) and the long side (313) is H2, and a ratio of H2 to H is 15% to 50%.

10. The secondary battery (10) according to claim 7, wherein the end cover (310) is a rectangular plate, the end cover (310) comprises two long sides (313) and two short sides (314), the long sides (313) have a length L, and the short sides (314) have a length H;
wherein the explosion-proof valve through hole (312) comprises two straight sides (3121) and two arc sides (3122), L:H<3:1, the two straight sides (3121) are spaced apart in a length direction of the end cover (310), an extending direction of the straight sides (3121) is a length direction of the explosion-proof valve through hole (312), and the straight sides (3121) are parallel to the short sides (314) of the end cover (310);
or the explosion-proof valve through hole (312) comprises two straight sides (3121) and two arc sides (3122), L:H≥3:1, the two straight sides (3121) are spaced apart in a width direction of the end cover (310), an extending direction of the straight sides (3121) is a length direction of the explosion-proof valve through hole (312), and the straight sides (3121) are parallel to the long sides (313) of the end cover (310).

11. A housing (100) of a secondary battery (10), comprising:
a bottom wall (130) having a thickness H9; and
a side wall (140) connected to the bottom wall (130), the side wall (140) and the bottom wall (130) enclosing a receiving space (120) configured to receive a bare cell (200), and the side wall (140) having a thickness H10;
wherein 0.85mm≤H9≤2.5mm, and 0.35mm≤H10≤1.5mm.

12. The housing (100) according to claim 11, wherein the receiving space (120) has a capacity L0, and a relationship between the thickness H9 of the bottom wall (130) and the capacity L0 of the receiving space (120) is: 0.3269 ln(H9) + 0.943 ≤ L0 ≤ 0.3995 ln(H9) + 1.4825;
and/or, the side walls (140) comprise two large-surface side walls (141) spaced apart along a first direction and two small-surface side walls (142) spaced apart along a second direction, the two large-surface side walls (141) are connected to the two small-surface side walls (142) end to end, a surface size of the large-surface side wall (141) is greater than a surface size of the small-surface side wall (142), a thickness of the large-surface side wall (141) is H11, and a thickness of the small-surface side wall (142) is H12;
wherein 0.35mm≤H11≤1.05mm and 0.35mm≤H12≤1.5mm.

13. The housing (100) according to claim 12, wherein a relationship between the thickness H11 of the large-surface side wall (141) and the capacity L0 of the receiving space (120) is: -0.0038H11² + 0.0788H11 + 0.3021 ≤ L0 ≤ -0.0043H11² + 0.0888H11 + 0.5526;
and/or, a relationship between the thickness H12 of the small-surface side wall (142) and the capacity L0 of the receiving space (120) is: 0.3884H12^{0·4354} ≤ L0 ≤ 0.8413H12^{0.2926};
and/or, a junction of the large-surface side wall (141) and the adjacent small-surface side wall (142) is provided with a first arc portion (150), an arc radius of the first arc portion (150) is R1, and 1.5mm≤R1≤3mm.

14. The housing (100) according to any one of claims 11 to 13, wherein a side of the side wall (140) away from the bottom wall (130) is provided with a protrusion (170), and the protrusion (170) extends towards an interior of the receiving space (120);
wherein an extending length of the protrusion (170) towards the interior of the receiving space (120) is D1, and 0.1mm ≤D1≤0.3mm;
and/or, two protrusions (170) are provided, and the two protrusions (170) are opposite to each other and located on a side of the side wall (140) facing the interior of the receiving space (120);
and/or, the protrusion (170) comprises a transition portion (171) and a support portion (172), the transition portion (171) is smoothly connected to the side wall (140), and the support portion (172) is connected to the transition portion (171) and extends into the receiving space (120);
an/or, a section of the transition portion (1i1) in a thickness direction of the side wall (130) has an arc shape,
and/or, the transition portion (171) and the side wall (140) form an obtuse angle, and the transition portion (171) is inclined towards the bottom wall (130).

15. A secondary battery (10), comprising:
the housing (100) according to any one of claims 11 to 14;
a bare cell (200) received in the receiving space (120), the bare cell (200) comprising a positive pole piece, a negative pole piece, and an insulating film; and
an end cover (310) sealing an opening end of the housing (100).

## Amended claims

### Amended claims in accordance with Rule 137(2) EPC.

1. A secondary battery (10), comprising:
a housing (100), an end of the housing (100) being provided with an opening (110), and a receiving space (120) being formed inside the housing (100);
a bare cell (200) provided in the receiving space (120); and
a top cover assembly (300) comprising an end cover (310) and lower plastic part (320) provided on the end cover (310), the end cover (310) sealing the opening (110), an explosion-proof valve through hole (312) configured to mount an explosion-proof valve (500) being provided in the end cover (310), a side of the lower plastic part (320) away from the end cover (310) facing the bare cell (200), the lower plastic part (320) being provided with a plurality of exhaust through holes (321) in communication with the explosion-proof valve (500), an area of the explosion-proof valve through hole (312) accounting for 1.5% to 8% of an area of the end cover (310); the plurality of exhaust through holes (321) being arranged at intervals, and exhaust areas of orthographic projections of the plurality of exhaust through holes (321) on the end cover (310) accounting for 1% to 5% of the area of the end cover (310);
wherein a receiving tank (322) configured to temporarily store an electrolyte solution is provided in a side of the lower plastic part (320) adjacent to the end cover (310), a plurality of backflow through holes (323) are provided in the bottom of the receiving tank (322), the plural backflow through holes (323) are divided into two groups, the two groups of backflow through holes (323) are provided at two ends of the lower plastic part (320), respectively, and backflow areas of orthographic projections of the plurality of backflow through holes (323) on the end cover (310) account for 0.5% to 3% of the area of the end cover (310).

2. The secondary battery (10) according to claim 1, wherein a sum of hole forming areas of orthographic projections of the exhaust through hole (321) and the backflow through hole (323) on the end cover (310) accounts for 2% to 10% of the area of the end cover (310).

3. The secondary battery (10) according to any one of the preceding claims, further comprising a connecting sheet, wherein the lower plastic part (320) comprises a body (324) and two bosses (325) provided at two ends of the body (324), the body (324) is connected to the end cover (310), a side of the boss (325) away from the body (324) faces the bare cell (200), a set height is formed between a side of the body (324) away from the end cover (310) and the side of the boss (325) away from the body (324); the connecting sheet is provided on the body (324) and is spaced apart from the boss (325), the connecting sheet is further connected to a bent tab (400) on the bare cell (200), and the set height is a sum of a thickness of the connecting sheet and a reserved height of the bent tab (400).

4. The secondary battery (10) according to claim 3, wherein the set height ranges from 1.76mm to 5.82mm; the bent tab (400) comprises a plurality of single pole pieces that are connected in sequence, the reserved height is a product of a thickness of each single pole piece, a number of the single pole pieces, and a set coefficient, the set coefficient ranges from 3 to 6; and the thickness of the connecting sheet ranges from 0.5mm to 1.5mm.

5. The secondary battery (10) according to any one of the preceding claims, wherein an enclosed area enclosed by an orthographic projection of an outer contour of the lower plastic part (320) on the end cover (310) accounts for 85% to 95% of the area of the end cover (310);
wherein along a length direction of the lower plastic part (320), a distance between an edge of the lower plastic part (320) and an edge of the end cover (310) is a first distance value, and the first distance value ranges from 1mm to 1.5mm; wherein along a width direction of the lower plastic part (320), the distance between the edge of the lower plastic part (320) and the edge of the end cover (310) is a second distance value, and the second distance value ranges from 1mm to 5mm;
wherein a first corner of the lower plastic part (320) is configured to be in a circular arc shape, a chamfer is provided at a second corner of the end cover (310), a linear distance between a central point of the first corner and a central point of the second corner is a third distance value, and the third distance value is greater than the first distance value and the second distance value.

6. The secondary battery (10) according to any one of the preceding claims, wherein the end cover (310) is further provided with two post through holes (311) extending through the end cover (310) along a thickness direction thereof, and along a plane perpendicular to the thickness direction of the end cover (310), a ratio of an area of each post through hole (311) to the area of the end cover (310) is 0.5% to 5%.

7. The secondary battery (10) according to claim 6, wherein the end cover (310) is a rectangular plate, the end cover (310) comprises two long sides (313) and two short sides (314), the long sides (313) have a length L, and the short sides (314) have a length H; a minimum distance between the post through hole (311) and the short side (314) is L3, and a ratio of L3 to L is 5% to 25%; a shortest distance between the post through hole (311) and the long side (313) is H3, and a ratio of H3 to H is 12% to 50%.

8. The secondary battery (10) according to claim 6, wherein the end cover (310) is a rectangular plate, the end cover (310) comprises two long sides (313) and two short sides (314), the long sides (313) have a length L, and the short sides (314) have a length H; in a length direction of the end cover (310), a minimum distance between the explosion-proof valve through hole (312) and the short side (314) is L2, and a ratio of L2 to L is 30% to 50%; in a width direction of the end cover (310), a shortest distance between the explosion-proof valve through hole (312) and the long side (313) is H2, and a ratio of H2 to H is 15% to 50%.

9. The secondary battery (10) according to claim 6, wherein the end cover (310) is a rectangular plate, the end cover (310) comprises two long sides (313) and two short sides (314), the long sides (313) have a length L, and the short sides (314) have a length H;
wherein the explosion-proof valve through hole (312) comprises two straight sides (3121) and two arc sides (3122), L:H<3:1, the two straight sides (3121) are spaced apart in a length direction of the end cover (310), an extending direction of the straight sides (3121) is a length direction of the explosion-proof valve through hole (312), and the straight sides (3121) are parallel to the short sides (314) of the end cover (310);
or the explosion-proof valve through hole (312) comprises two straight sides (3121) and two arc sides (3122), L:H≥3:1, the two straight sides (3121) are spaced apart in a width direction of the end cover (310), an extending direction of the straight sides (3121) is a length direction of the explosion-proof valve through hole (312), and the straight sides (3121) are parallel to the long sides (313) of the end cover (310).

10. The secondary battery (10) according to claim 6, wherein the two post through holes (311) are asymmetrically provided about the explosion-proof valve through hole (312).
